# EUROPEAN PATENT APPLICATION

(11) **EP 4 632 977 A1**
(43) Date of publication of application: **15.10.2025**
(21) Application number: 24169451.2
(22) Date of filing: 10.04.2024
(51) Int. Cl.: H02G 15/06, H02G 15/08, H02G 15/18, H01R 4/36

(54) **POWER CABLE ACCESSORY ASSEMBLY**

(71) Applicant: NKT HV Cables AB, 371 60 Lyckeby (SE)
(72) Inventor: SANDWALL, Erik, Alingsås (SE); RAPP, Hans, Alingsås (SE); ELJEIZ, Ekram, Göteborg (SE); HJÄRTBERG, Malte, Borås (SE)
(74) Representative: Kransell & Wennborg KB

(57) **Abstract**

A power cable accessory assembly (1.1) comprising: a power cable (3) comprising: a conductor (5), and an electrical insulation layer (7) arranged around the conductor (5); a fastening device (11a) attached to an end face (7.1) of the electrical insulation layer (7), and a connector (9) mechanically connected to the conductor (5), wherein the connector (9) has an inner surface provided with a structure that engages with the fastening device (11a) to maintain an axially fixed position between the connector (9) and the electrical insulation layer (7).

## Description

### TECHNICAL FIELD

The present disclosure generally relates to power cable accessories.

### BACKGROUND

When installing power cable accessories such as joints and terminations, the insulation system of the power cable(s) is/are partly stripped off from the conductor(s) close to the conductor joint. This can result in an undesired phenomenon called shrinkback when the cable heats up in operation if the insulation comprises polymeric material. Shrinkback occurs when the insulation pulls back from the conductor joint because of built-in mechanical stresses in the insulation from the manufacturing process. This increases the risk of electrical breakdown due to a translation of the insulation edge from the intended position by design.

EP1 158 638 discloses a solution to reduce the risk of shrinkback. According to EP1 158 638, a cable joint arrangement comprises a connection tube sleeve for mechanically joining two conductors of a first and a second cable, wherein the tube sleeve comprises a circumferential groove on either end. The groove is adapted to interface with an anchor element and the anchor element is further adapted to interface with a cut groove in the cross-linked polyethylene (XLPE) insulation of the cable end such that the tube sleeve is mechanically connected to the insulation of either cable end.

There is a risk of bending of the flanges in the XLPE insulation received by the anchor element. At some shrinkage force and increased temperature, these flanges will disengage from the anchor elements because of the relatively low bending stiffness of XLPE at elevated temperatures.

### SUMMARY

A general object of the present disclosure is to provide a power cable accessory assembly that solves or at least mitigates the problems of the prior art.

There is hence provided a power cable accessory assembly comprising: a power cable comprising: a conductor, and an electrical insulation layer arranged around the conductor; a fastening device attached to an end face of the electrical insulation layer, and a connector mechanically connected to the conductor, wherein the connector has an inner surface provided with a structure that engages with the fastening device to maintain an axially fixed position between the connector and the electrical insulation layer.

The connection between the connector and the electrical insulation layer thus prevents or at least reduces shrinkback.

The electrical insulation layer may comprise a thermosetting polymer such as crosslinked polythyelene. Thermosetting polymers are hardened, making the solution in which the connector engages with the electrical insulation layer by means of the fastening device more durable. Alternatively, the electrical insulation layer may be a thermoplastic polymer.

The end face of the electrical insulation system may be a transverse surface. A transverse surface is transverse, i.e., at a 90° angle or at about a 90° angle, to a median plane of the power cable, i.e., a plane that divides the power cable in two equal halves along its longitudinal axis.

According to one embodiment the fastening device and the connector are connected by means of a bayonet connection.

Due to the bayonet connection and the fastening device being attached to an end face of the electrical insulation layer, i.e., axially, the installation procedure is more intuitive to understand and simpler to carry out for the person assembling the power cable accessory assembly.

Other possibilities for connecting the fastening device and the connector are also possible. For example, the fastening device may be received by an axial opening in the connector, wherein the fastening device may be fixed to the connector by means of screws screwed radially through the connector into the fastening device. The radial screws may for example be screwed into respective threaded openings of the fastening device or into a respective or common recess, or a circumferential groove, of the fastening device, to hold the connector axially fixed relative to the fastening device.

According to one embodiment the fastening device comprises a flange engaging with the structure.

According to one embodiment the structure is circumferentially extending groove.

According to one embodiment the flange has a central opening through which the conductor extends.

According to one embodiment the fastening device comprises fasteners screwed axially through the flange into the end face of the electrical insulation layer.

According to one embodiment the fastening device comprises a plurality of pins, each pin extending in a tangential direction of the power cable inside the the electrical insulation layer, wherein the fasteners are screwed into the pins.

According to one embodiment the fastening device comprises at least three pins arranged such that they in cross-section of the power cable form a polygon or form part of a polygon.

According to one embodiment the pins are made of metal.

According to one embodiment the connector has an outer surface which is in level with an outer surface of the electrical insulation layer. The outer surface of the connector may be flush with the outer surface of the electrical insulation layer. Installation of outer layers such as a pre-moulded sleeve comprising polymeric material may thereby be facilitated.

According to one embodiment the fastening device and the connector form part of a cable joint.

According to one embodiment the fastening device and the connector form part of a cable termination.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a longitudinal section of a portion of a first example of a power cable accessory assembly;
Fig. 2 schematically shows a portion of a second example of a power cable accessory assembly; and
Fig. 3 shows a cross-sectional view along lines A-A in Fig. 2.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

Each example of a power cable accessory assembly described herein comprises a power cable, a fastening device, and a connector.

In all examples, the power cable has a conductor and an electrical insulation layer arranged around the conductor.

The connector, or ferrule, is mechanically connected to the conductor.

The fastening device is attached to an end face of the electrical insulation layer.

The connector has an inner surface provided with a structure tha engages with the fastening device to maintain an axially fixed position between the connector and the electrical insulation layer.

The power cable may be a medium voltage or a high voltage power cable.

The power cable may be an underground power cable or a submarine power cable.

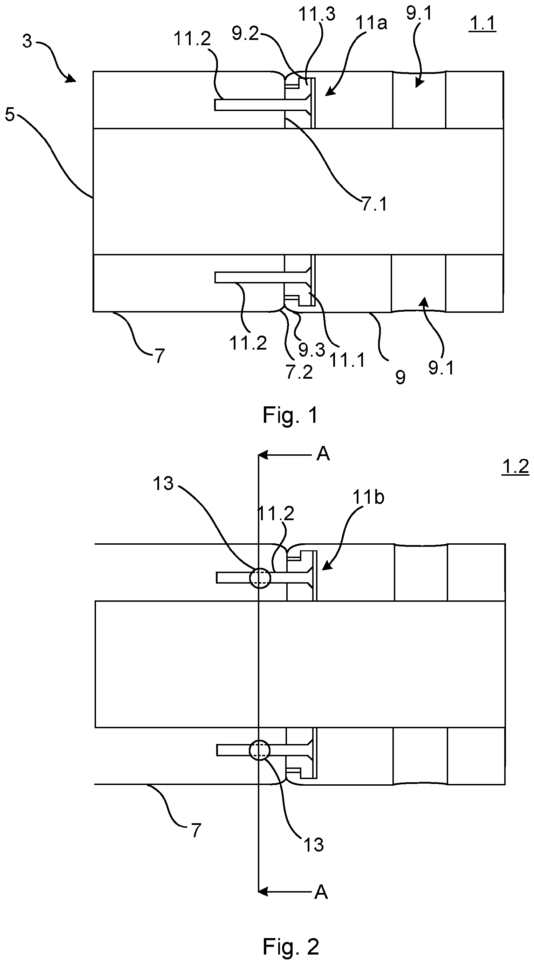

With reference to Fig. 1 a first example of a power cable accessory assembly 1.1 will be described.

The power cable accessory assembly 1.1 is shown in a longitudinal sectional view, with only a portion thereof being depicted.

The power cable accessory assembly 1.1 comprises a power cable 3.

The power cable 3 comprises a conductor 5. The conductor 5 may for example comprise copper or aluminium.

The power cable 3 comprises an electrical insulation layer 7 arranged around the conductor 5.

The power cable 3 may comprise an insulation system, and the electrical insulation layer 7 may form part of the insulation system. The insulation system may in addition to the electrical insulation layer 7 comprise an inner semiconducting layer (not shown) arranged radially directly inside the electrical insulation layer 7, and an outer semiconducting layer (not shown) arranged radially directly outside the electrica insulation layer 7. This general structure applies to any examples presented herein.

The insulation system may be an extruded insulation system. The electrical insulation layer 7 may comprise a polymeric material, such as a thermosetting polymeric material. Hereto, the electrical insulation layer 7 may be cured. The electrical insulation 7 may for example comprise XLPE, such as crosslinked low density or linear low density polyethylene (LDPE, LLDPE), medium density polyethylene (MDPE) or high density polyethylenbe (HDPE). These examples apply to any examples disclosed herein.

The electrical insulation layer 7 has an end face 7.1. The end face 7.1 may be a transverse surface of the electrical insulation layer 7. The electrical insulation layer 7 may be mechanically processed during the assembly of the power cable accessory assembly 1.1 to obtain the end face 7.1.

The outer semiconducting layer has been stripped from the electrical insulation layer 7 along an end section of the electrical insulation layer 7 leading up to the end face 7.1.

The power cable accessory assembly 1.1 comprises a connector 9, of which only a portion of its axial extension is shown in Fig. 1. The connector 9 may have a generally cylindrical or a cylindrical shape.

The connector 9 is made of an electrically conductive material. The connector 9 is typically made of metal, such as copper, a copper alloy, aluminium, an aluminium alloy, or steel.

The connector 9 has an axial opening which receives an end portion of the conductor 5. The connector 9 is mechanically connected to the conductor 5. In particular, the end portion of the conductor 5 is in mechanical and electrical contact with the connector 9.

The connector 9 may be clamped or screwed to the conductor 5 to set the connector 9 in mechanical and electrical contact with the conductor 5. In the example shown in Fig. 1, the connector 9 has radially extending throughopenings 9.1 extending into the axial opening of the connector 9. Each radially extending opening is arranged to receive a shear-off screw or similar fastening means, which bears against the outer surface of the conductor 5.

The power cable accessory assembly 1.1 comprises a fastening device 11a. The fastening device 11a is attached to the end face 7.1 of the electrical insulation layer 7.

The fastening device 11a is arranged sandwiched between the end face 7.1 of the electrical insulation layer 7 and the connector 9.

The fastening device 11a comprises a flange 11.1. The flange 11.1 has a central opening which extends through the flange 11.1 in a direction of the longitudinal axis of the power cable 1. The conductor 5 extends through the central opening of the flange 11.1 into the connector 9.

The fastening device 11a may be made of metal such as steel, copper or a copper alloy, or aluminium or an aluminium alloy.

The hollow connector 9 has an inner surface provided with a structure that engages with the fastening device 11a to maintain an axially fixed position between the connector 9 and the fastening device 11a. Further, since the fastening device 11a is attached to the end face 7.1 of the electrical insulation layer 7, the connector 9 is axially fixed relative to the electrical insulation layer 7. This reduces the risk of shrinkback of the electrical insulation layer 7 relative to the connector 9.

According to the example, the flange 11.1 engages with the structure of the connector 9. The structure may be a circumferentially extending groove 9.2. Hereto, an outer peripherial portion of the flange 11.1 maybe arranged in the groove 9.2

The flange 11.1 has a smaller radial dimension than the outer radial dimension of the connector 9. The connector 9 may have an outer surface which has the same radial dimension as the outer surface of the electrical insulation layer 7, or essentially the same radial dimension as the outer surface of the electrical insulation layer 7, e.g., with a difference in a range of:t5%. The outer surface of the connector 9 may thus be in level or flush with the outer surface of the electrical insulation layer 7.

The fastening device 11a comprises fasteners 11.2 which attach the fastening device 11a to the end face 7.1 of the electrical insulation layer 7. The fasterners 11.2 are screwed axially though the flange into the end face 7.1 of the electrical insulation layer 7. The fasteners 11.1 may be screws. Each screw may for example have a thread with a pitch in a range of 4-6 mm and/or a crestdimension in a range of 2- 4 mm, measured from the central longitudinal axis of the screw. This ensures good gripping with the electrical insulation layer 7.

The fasterners 11.2 may be distributed evenly or unevenly in the circumfrential direction along the flange 11.1.

The fastening device 11a and the connector 9 may be connected with a bayonet connection. According to one example, the connector 9 may comprise one or more axial channels extending from an end face of the connector 9 into the groove 9.2. The flange 11.1 may comprise one or more radial protrusions 11.3 arranged to be received by a respective one of the channels. The fastening device 11a may thus be connected to the connector 9 by aligning the one or more radial protrusions 11.2 with the corresponding one or more channels, and then sliding the connector 9 axially towards the fastening device 11.2 such that the radial protrusions 11.3 enter the groove 9.2. The connector 9 can then be turned or rotated relative to the fastening device 11a such that each radial protrusion 11.3 is shifted circumferentially from the channel through which it passed into the groove 9.2.

In case the power cable accessory assembly 1.1 is a cable joint, the connector 9 has a respective opening at each axial end, arranged to receive the conductor 5 of a respective power cable 3. The power cable accessory assembly 1.1. will in this case normally be symmetric with respect to a transverse plane, i.e., another power cable is connected from the right of the connector 9. The conductor joint between the conductors 5 is formed in the connector 9.

In case the power cable accessory assembly 1.1 is a cable termination system, the connector 9 may have a respective opening at each axial end, arranged to receive the conductor 5 of the power cable 3 and e.g., a rod or tube in the opening at its other axial end. The connector 9 is thus connected to the conductor 5 and to the rod or tube, which extends to a top bolt of the cable termination system.

A peripheral edge of the end face 7.1 of the electrical insulation layer 7.1 may according to one example have a rounded end section edge 7.2.

The end face of the connector 9, which faces the end face 7.1 of the electrical insulation layer 7 may have a rounded connector end edge 9.3. The rounded connector end edge 9.3 reduces the risk of scraping e.g., a pre-moulded sleeve made of polymeric material, which may be slid over the connector 9 and onto the electrical insulation layer 7 after the connector 9 has been attached to the fastening device 11a and to the electrical insulation layer 7 by means of the fastening device 11a when the power cable accessory assembly 1.1 is assembled.

Figs 2-3 show a second example of a power cable accessory assembly 1.2. Like in the first example shown in Fig. 1, the connector 9 engages with the fastening device 11b, which is attached to the end face 7.1 of the electrical insulation system 7.

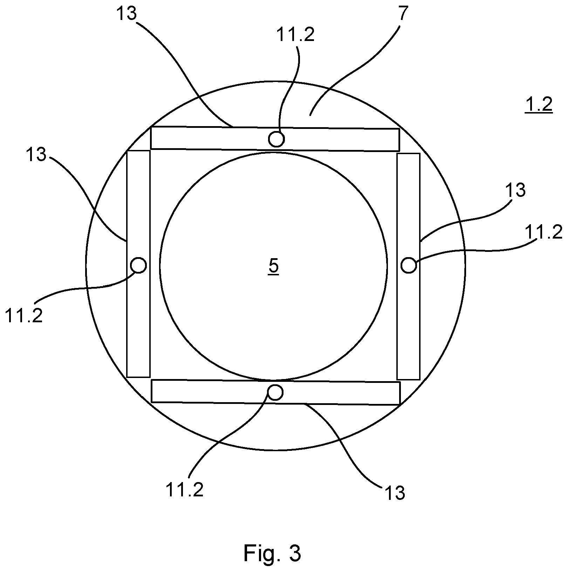

Fig. 3 shows a cross-section of the power cable accessory assembly 1.2 taken along lines A-A in Fig. 2. The fastening device 11b is similar to the fastening devie 11a but additionally comprises a plurality of pins 13. Each pin 13 extends in a tangential direction of the power cable 3 inside the electrical insulation layer 7.

The pins 13 may be made of metal such as steel, e.g., stainless steel, carbon steel, or copper or a copper alloy, aluminium or an aluminium alloy.

According to the second example, the fastening device 11b comprises at least three pins 13 arranged such that they in cross-section of the power cable 3 form a polygon or form part of a polygon, for example a rectangle or a triangle. According to the example, the fastening device 11b comprises four pins 13 in a rectangular formation, as shown in Fig. 3

During assembly of the power cable accessory assembly 1.2 the pins 13 may first be inserted into bores in the electrical insulation layer 7. Then, the fasteners 11.2 extending through the flange 11.1 are screwed into the end face 7.1 of the electrical insulation layer 7 and further into the pins 13. The end face 7.1. may be provided with axial bores before the fasteners 11.2 are screwed into the axial bore of the end face 7.1. Each fastener 11.2 is screwed into one pin 13. The mechanical connection between the flange 11.1 and the electrical insulation layer 7 is thereby made stronger. Next, the connector 9 is connected to the fastening device 11b. The connector 9 may for example be connected to the fastening device 11b by means of a bayonet connection. The connector 9 may thus be slid over the flange 11.1 and then turned or rotated relative to the fastening devicwe 11b to lock the connector 9 axially relative to the fastening device 11b. Next, the connector 9 may be attached mechanically to the conductor 5, e.g. by means of shear-off screws and/or by clamping. When the connector 9 has been attached to the conductor 5, a pre-moulded sleeve may be slid over the connector 9 and the interface between the connector 9 and the electrical insulation layer 7.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Power cable accessory assembly (1.1; 1.2) comprising:
- a power cable (3) comprising:
a conductor (5), and
an electrical insulation layer (7) arranged around the conductor (5);
- a fastening device (11a; 11b) attached to an end face (7.1) of the electrical insulation layer (7), and
- a connector (9) mechanically connected to the conductor (5), wherein the connector (9) has an inner surface provided with a structure that engages with the fastening device (11a; 11b) to maintain an axially fixed position between the connector (9) and the electrical insulation layer (7).

2. Power cable accessory assembly (1.1; 1.2) as claimed in claim 1, wherein the fastening device (11a; 11b) and the connector (9) are connected by means of a bayonet connection.

3. Power cable accessory assembly (1.1; 1.2) as claimed in claim 1 or 2, wherein the fastening device comprises a flange (11.1) engaging with the structure.

4. Power cable accessory assembly (1.1; 1.2) as claimed in claim 3, wherein the structure is circumferentially extending groove (9.2).

5. Power cable accessory assembly (1.1; 1.2) as claimed in claim 3 or 4, wherein the flange (11.1) has a central opening through which the conductor (5) extends.

6. Power cable accessory assembly (1.1; 1.2) as claimed in claim 5, wherein the fastening device (11a; 11b) comprises fasteners (11.2) screwed axially through the flange (11.1) into the end face (7.1) of the electrical insulation layer (7).

7. Power cable accessory assembly (1.2) as claimed in claim 6, wherein the fastening device (11b) comprises a plurality of pins (13), each pin (13) extending in a tangential direction of the power cable (3) inside the electrical insulation layer (7), wherein the fasteners (11.2) are screwed into the pins (13).

8. Power cable accessory assembly (1.2) as claimed in claim 7, wherein the fastening device (11b) comprises at least three pins (13) arranged such that they in cross-section of the power cable (3) form a polygon or form part of a polygon.

9. Power cable accessory assembly (1.2) as claimed in claim 7 or 8, wherein the pins are made of metal.

10. Power cable accessory assembly (1.1; 1.2) as claimed in any of the preceding claims, wherein the connector (9) has an outer surface which is in level with an outer surface of the electrical insulation layer (7).

11. Power cable accessory assembly (1.1; 1.2) as claimed in any of the preceding claims, wherein the fastening device (11a; 11b) and the connector (9) form part of a cable joint.

12. Power cable accessory assembly (1.1; 1.2) as claimed in of claims 1-10, wherein the fastening device (11a; 11b) and the connector (9) form part of a cable termination.
